# EUROPEAN PATENT SPECIFICATION

(11) **EP 4 407 774 B1**
(45) Date of publication and mention of the grant of the patent: **04.03.2026**
(21) Application number: 23843375.9
(22) Date of filing: 19.07.2023
(51) Int. Cl.: H01M 50/383, H01M 50/30, H01M 50/105, H01M 50/211, H01M 50/358

(54) **BATTERY CELL UNIT, AND BATTERY PACK AND VEHICLE INCLUDING THE SAME**
BATTERIEZELLENEINHEIT UND BATTERIEPACK SOWIE FAHRZEUG DAMIT
UNITÉ CELLULE DE BATTERIE, ET BLOC-BATTERIE ET VÉHICULE LA COMPRENANT

(30) Priority: 20.07.2022 KR 20220089572
(43) Date of publication of application: 31.07.2024
(73) Proprietor: LG Energy Solution, Ltd., Seoul 07335 (KR)
(72) Inventor: PARK, Jeong-Hoon, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2023/010418
(87) International publication number: WO 2024/019529

(56) References cited:
- EP-A1- 4 203 156
- KR-A- 20170 069 003
- KR-A- 20180 091 301
- KR-A- 20200 107 213
- KR-A- 20210 063 939
- KR-A- 20220 021 143
- KR-A- 20220 075 711
- KR-A- 20220 075 712
- US-A1- 2017 331 089
- US-A1- 2018 047 954
- US-A1- 2022 173 475

## Description

### TECHNICAL FIELD

The present application claims priority to Korean Patent Application No. 10-2022-0089572 filed on July 20, 2022 in the Republic of Korea.

The present disclosure relates to a battery cell unit, and a battery pack and a vehicle including the same, and more particularly, to a battery cell unit with improved stability, and a battery pack and a vehicle including the battery cell unit.

### BACKGROUND ART

As technology development and demand for various mobile devices, electric vehicles, and energy storage systems (ESSs) increase significantly, interest in and demand for secondary batteries as energy sources are rapidly increasing.

Nickel cadmium batteries or nickel hydride batteries have been widely used as conventional secondary batteries, but recently, lithium secondary batteries, which have almost no memory effect compared to nickel-based secondary batteries and thus have advantages of free charge/discharge, very low self-discharge rate, and high energy density, have been widely used.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

In general, according to a shape of a casing, secondary batteries may be classified into can-type batteries in which an electrode assembly is received in a metal can, and pouch-type batteries in which an electrode assembly is received in a pouch of an aluminum laminate sheet.

Recently, battery packs have been widely used for driving or energy storage in medium and large-sized devices such as electric vehicles or ESSs.

A conventional battery pack includes one or more battery modules and a control unit for controlling charging and discharging of the battery pack in a pack case. The battery module includes a plurality of battery cells in a module case.

That is, in a conventional battery pack, a plurality of battery cells (secondary batteries) are accommodated in a module case to constitute each battery module, and one or more battery modules are accommodated in a pack case to constitute a battery pack.

In particular, pouch-type batteries have various advantages of light weight and small dead space when stacked, but are vulnerable to external impact and have poor assemblability. Accordingly, it is common to manufacture a battery pack by first modularizing a plurality of cells and then accommodating the plurality of cells in a pack case.

Safety is one of the most important issues in such a battery pack configuration. In particular, when a thermal event occurs in any one of a plurality of battery cells included in a battery pack, it is necessary to prevent propagation of the thermal event to other battery cells.

When the propagation of the thermal event between battery cells is not appropriately suppressed, this may cause a thermal event of other battery cells included in the battery pack, thereby causing a bigger problem such as ignition or explosion of the battery pack.

Furthermore, the ignition or explosion of the battery pack may cause great damage to surrounding people or property. Accordingly, in such a battery pack, a configuration capable of appropriately controlling a thermal event is required.

KR 2022-0021143 A and US 2022/173475 A1 describe examples of battery modules. US 2018/047954 A1 describes an example of a cell cover for a secondary battery. KR 2022-0075712 A describes an example of a battery sub-packing unit. US 2017/331089 A1 describes an example of a power source device.

### DISCLOSURE

### Technical Problem

The present disclosure is designed to solve the problems of the related art, and therefore the present disclosure is directed to providing a battery cell unit configured to, when a thermal event occurs in a battery cell, prevent flames, sparks, venting gas, etc. ejected from the battery cell from propagating to other surrounding battery cells and discharge venting gas in a specific direction to reduce internal pressure, and a battery pack and a vehicle including the battery cell unit.

However, technical problems to be solved by the present disclosure are not limited to the above-described technical problems and one of ordinary skill in the art will understand other technical problems from the following description.

### Technical Solution

In one aspect of the present disclosure, there is provided a battery cell unit according to claim 1.

In an embodiment, a mesh member may be formed inside the particle pocket portion.

In an embodiment, the mesh member may be formed by overlapping several porous metal plates.

In an embodiment, a directional venting unit may be formed in the cell cover to guide venting gas to be discharged in a preset direction.

In an embodiment, the battery cell unit may include a thermal resin coupled to the cell cover, wherein the cell cover includes a portion to which the thermal resin is coupled and a portion to which the thermal resin is not coupled, wherein the directional venting unit includes a gas outlet formed in the portion of the cell cover to which the thermal resin is not coupled, and a movement path formed between the pouch-type battery cell and the cell cover.

In an embodiment, the gas outlet may be formed in a lower portion of the cell cover.

In an embodiment, the cell cover may be configured to support a state where a plurality of pouch-type battery cells are stacked.

In an embodiment, the cell cover may be formed in an 'n' shape.

In an embodiment, the cell cover may be formed of a metal material.

In an embodiment, the battery pack may further include a bus bar configured to connect a plurality of electrode leads.

In an embodiment, the cell cover may be configured to partially surround the pouch-type battery cell so that at least one side of the surrounded pouch-type battery cell is exposed to outside.

In another aspect of the present disclosure, there is provided a battery pack including the battery cell unit described above and a pack case having an inner space in which the battery cell unit is accommodated.

In an embodiment, the cell cover may be configured so that at least one side of the surrounded pouch-type battery cell is exposed toward a bottom surface of the battery pack.

In an embodiment, the cell cover may be directly seated on the pack case.

In another aspect of the present disclosure, there is provided a vehicle including the battery cell unit described above.

### Advantageous Effects

According to one aspect of the present disclosure, when a thermal event occurs in a battery cell, flames, sparks, venting gas, etc. ejected from the battery cell may be prevented from propagating to other surrounding battery cells, and structural collapse of a cell assembly may be prevented by discharging venting gas to suppress a rapid pressure increase.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIGS. 1 to 3 are views illustrating a process of coupling a cell cover to a pouch-type battery cell in a battery cell unit and connecting two pouch-type battery cells to a bus bar according to an embodiment of the present disclosure.
FIG. 4 is an exploded perspective view illustrating a pouch-type battery cell and a cell cover provided in a battery cell unit according to an embodiment of the present disclosure.
FIG. 5 is a cross-sectional view illustrating a state where the pouch-type battery cell and the cell cover of FIG. 4 are coupled to each other.
FIG. 6 is a partial perspective view illustrating a state where the pouch-type battery cell and the cell cover of FIG. 4 are coupled to each other, particularly illustrating a gas outlet.
FIG. 7 is a side cross-sectional view illustrating a state where the pouch-type battery cell and the cell cover of FIG. 4 are coupled to each other, particularly illustrating a directional venting unit that is gas exhaust path.
FIG. 8 is a schematic exploded perspective view illustrating a battery pack according to an embodiment of the present disclosure.
FIG. 9 is a view for describing a vehicle including a battery pack according to each embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when members are "coupled" or "connected" to each other, the members may be directly coupled or connected to each other, or may be indirectly coupled or connected to each other with an intervening member therebetween.

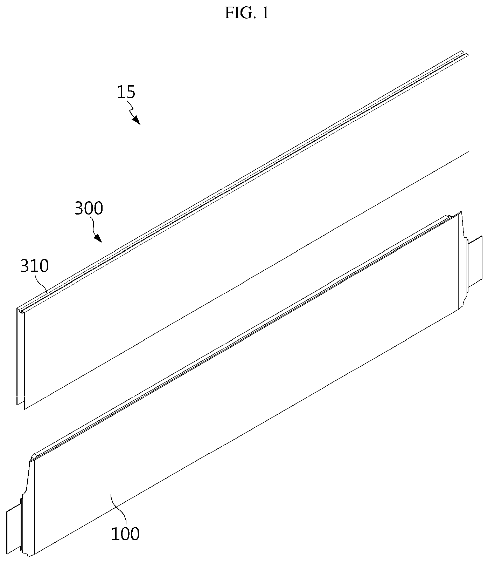

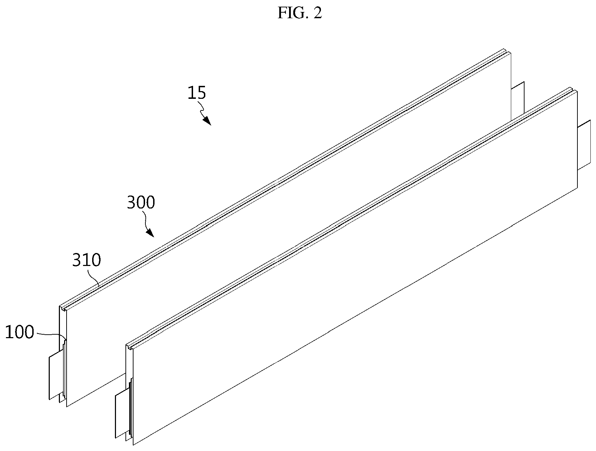

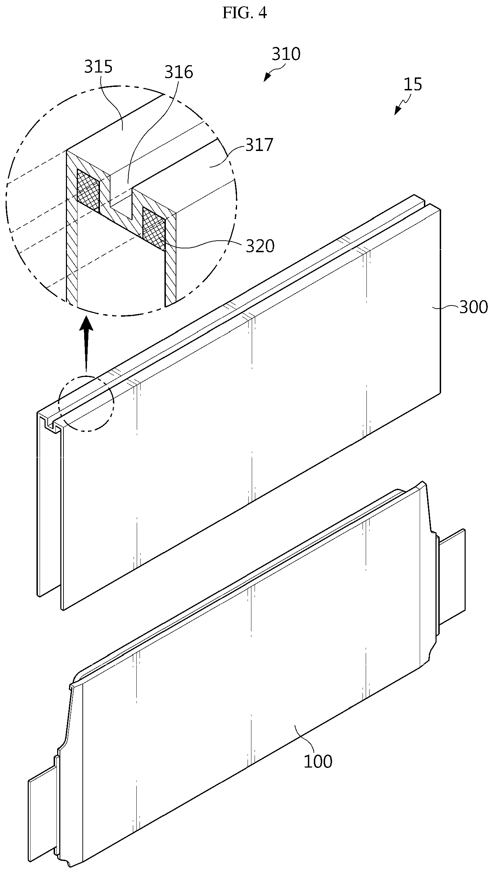

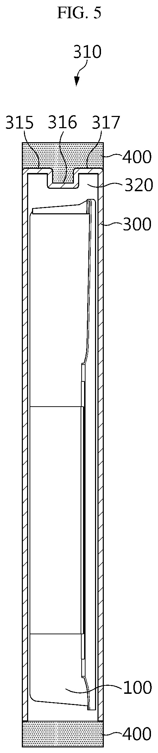

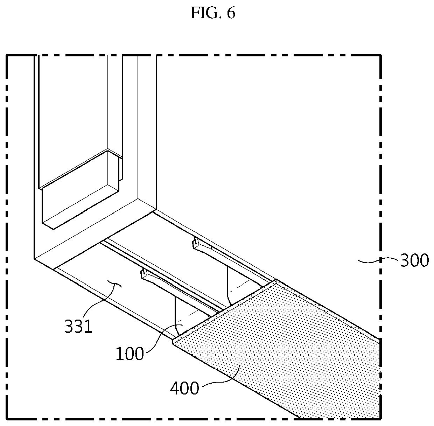

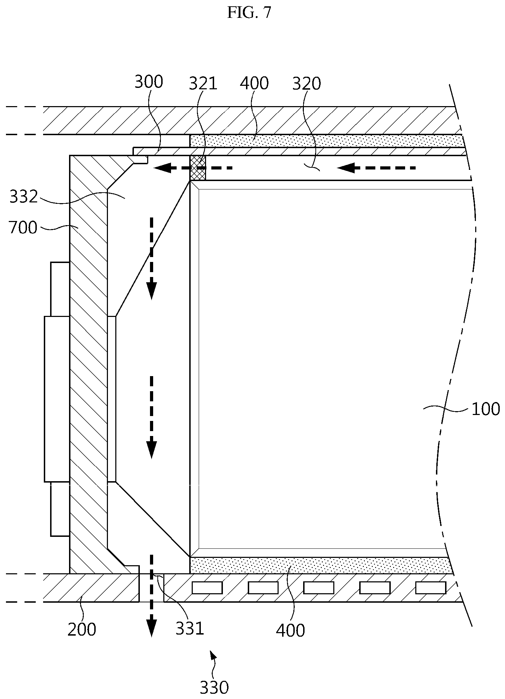

FIGS. 1 to 3 are views illustrating a process of coupling a cell cover to a pouch-type battery cell in a battery cell unit and connecting two pouch-type battery cells to a bus bar according to an embodiment of the present disclosure. FIG. 4 is an exploded perspective view illustrating a pouch-type battery cell and a cell cover provided in a battery cell unit according to an embodiment of the present disclosure. FIG. 5 is a cross-sectional view illustrating a state where the pouch-type battery cell and the cell cover of FIG. 4 are coupled to each other. FIG. 6 is a partial perspective view illustrating a state where the pouch-type battery cell and the cell cover of FIG. 4 are coupled to each other, particularly illustrating a gas outlet. FIG. 7 is a side cross-sectional view illustrating a state where the pouch-type battery cell and the cell cover of FIG. 4 are coupled to each other, particularly illustrating a directional venting unit that is a gas exhaust path.

Referring to FIG. 1, a battery cell unit 15 according to an embodiment of the present disclosure includes a pouch-type battery cell 100 and a cell cover 300.

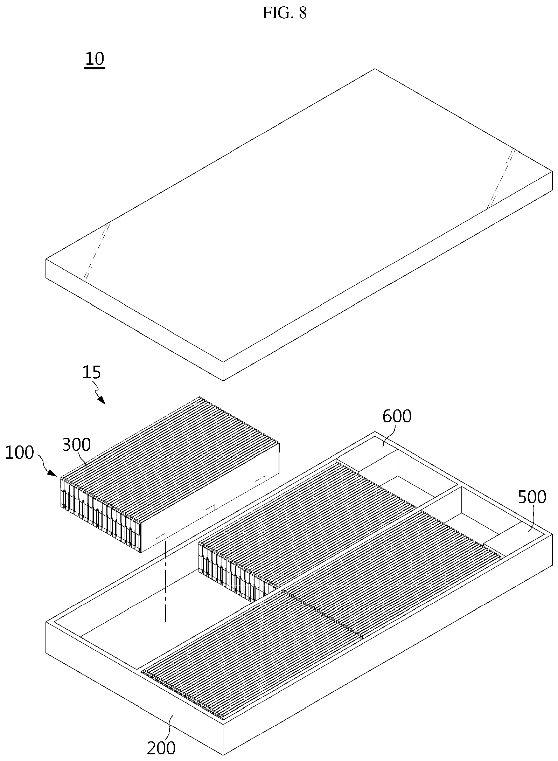

The pouch-type battery cell 100 that is a pouch-type secondary battery may include an electrode assembly, an electrolyte, and a pouch casing. A plurality of pouch-type battery cells 100 may be included in a battery module (not shown) or a battery pack 10 (see FIG. 8). Also, the plurality of pouch-type battery cells 100 may be stacked in at least one direction.

Referring to FIGS. 1 to 3, the cell cover 300 may be provided to at least partially surround the pouch-type battery cell 100. For example, the cell cover 300 may be configured to surround both side surfaces and an upper side of at least some pouch-type battery cells 100. However, the present disclosure is not limited thereto.

The cell cover 300 may be configured to partially surround the pouch-type battery cell 100 so that at least one side of the surrounded pouch-type battery cell 100 is exposed to the outside.

The cell cover 300 may be configured to support the pouch-type battery cell 100 in an upright state. In general, it is not easy to stack the pouch-type battery cells 100 in a vertical direction. However, the cell cover 300 provided in the battery cell unit 15 according to the present disclosure may be configured to surround one or more pouch-type battery cells 100 and maintain the surrounded battery cells 100 in an upright state, that is, an erected state.

The cell cover 300 may be configured to surround a various number of pouch-type battery cells 100 together. For example, one cell cover 300 may be configured to surround one pouch-type battery cell 100. Alternatively, the cell cover 300 may be configured to surround two pouch-type battery cells 100 together, or may be configured to surround three or more pouch-type battery cells 100 together.

The cell cover 300 may be configured to support a state where a plurality of pouch-type battery cells 100 are stacked. In particular, the plurality of pouch-type battery cells 100 may be horizontally stacked in an upright state, and the cell cover 300 may be configured to stably support the plurality of pouch-type battery cells 100 in the upright state.

Referring to FIGS. 1 to 4, the cell cover 300 may be formed in a substantially 'n' shape. In this case, a front side, a rear side, and a lower side of the cell cover 300 may be open.

However, a shape of the cell cover 300 is not limited to the substantially 'n' shape. The cell cover 300 may be formed in any of various shapes. For example, the cell cover 300 may be formed in a ' ' shape, a 'U' shape, or a 'O' shape.

The cell cover 300 may be formed of a metal material. In particular, the cell cover 300 may be formed of a steel material, for example, stainless steel (SUS).

In this case, because a stainless steel material has excellent mechanical strength and rigidity and a higher melting point than an aluminum material, even when a flame is generated in an arbitrary battery cell 100, melting of the cell cover 300 by the flame or the like may be more effectively prevented.

That is, damage or breakage of the pouch-type battery cell 100 may be more effectively prevented, and handling of the pouch-type battery cell 100 may be made easier. However, a material of the cell cover 300 is not limited thereto.

The cell cover 300 may be at least partially adhered to the pouch-type battery cell 100. Also, a thermal resin 400 (see FIGS. 5 and 6) may be located between the pouch-type battery cell 100 and a pack case 200 and/or between the cell cover 300 and the pack case 200.

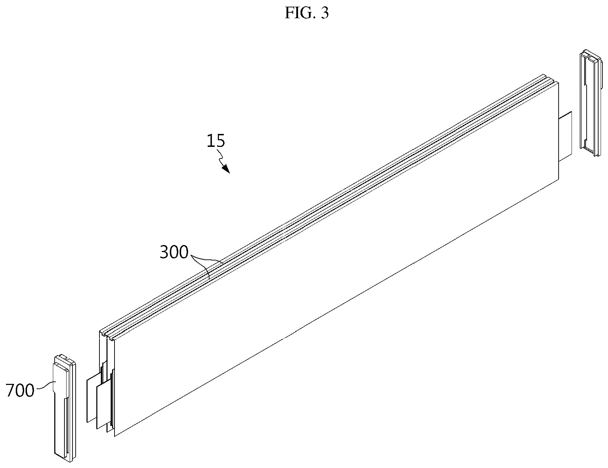

Also, the battery cell unit 15 according to an embodiment of the present disclosure may further include a bus bar 700 (see FIG. 3). The bus bar 700 may be connected to electrode leads of one or more pouch-type battery cells 100.

**In** particular, the bus bar 700 may connect a plurality of electrode leads to connect a plurality of battery cells 100 in series or in parallel. For example, electrode leads may be located at the front and rear of each pouch-type battery cell 100. **In** this case, the bus bars 700 may be located in front of or behind the battery cell 100 and may connect the electrode leads.

The bus bar 700 may be formed of an electrically conductive material such as copper or aluminum, and may directly contact the electrode leads.

Referring to FIGS. 4 and 5, the cell cover 300 may be configured to be spaced apart from the pouch-type battery cell 100 and include a particle pocket portion 320 configured to collect particles ejected from the pouch-type battery cell 100 when a thermal event occurs.

The particle pocket portion 320 may be formed at any of various positions of the cell cover 300. For example, the particle pocket portion 320 may be formed on an upper side of the cell cover 300, but the present disclosure is not limited thereto.

According to the claimed subject matter, the particle pocket portion 320 is formed on the upper side of the cell cover 300 so that both side portions 315, 317 along a width direction of the cell cover 300 protrude more upward than a central portion 316. According to this configuration, a preset space may be formed above the pouch-type battery cell 100 inside the cell cover 300.

The particle pocket portion 320 is configured to collect particles ejected from the pouch-type battery cell 100 when a thermal event occurs.

That is, in the particle pocket portion 320, the both side portions 315, 317 of the cell cover 300 may protrude to form a preset space inside the protruding portions, and high-temperature dust, particles, etc. ejected from the battery cell 100 during a thermal event may be collected through the space. The particles may refer to molten aluminum particles or an active material removed from an electrode in the battery cell 100.

Because high-temperature dust, particles, etc. act as an ignition source among three elements of fire: a combustible material, an ignition source, and oxygen, when the high-temperature dust, particles, etc. meet a combustible material and oxygen outside the cell cover 300, ignition may occur and a flame may rapidly spread inside the pack case 200. Accordingly, it is necessary to prevent high-temperature dust, particles, etc. from escaping to the outside of the cell cover 300.

The cell cover 300 according to the present embodiment may collect high-temperature dust, particles, etc. by using the particle pocket portion 320. Accordingly, even when a thermal event occurs in an arbitrary pouch-type battery cell 100, a flame may be prevented from rapidly spreading to other battery cells 100 or electronic components inside the pack case 200.

Referring to FIGS. 4 and 4, for example, the particle pocket portion 320 may be formed on an upper side of the cell cover 300, and due to this shape, a contact area between the upper side of the cell cover 300 and the thermal resin 400 may increase. In this case, thermal conductivity to the outside of the cell cover 300 may increase, thereby improving cooling efficiency.

That is, referring to FIG. 5, the upper side of the cell cover 300 may be thermally connected to the pack case 200 having a large heat capacity, through the thermal resin 400. **In** this case, because the thermal resin 400 is filled in a concave central portion of the upper side of the cell cover 300, a contact area between the cell cover 300 and the thermal resin 400 may increase. Accordingly, heat dissipation performance may be improved.

Referring to FIG. 7, a mesh member 321 may be formed inside the particle pocket portion 320. The mesh member 321 may be formed by overlapping several porous metal plates to function as a flame arrester.

According to this configuration, because the movement of a flame, high-temperature dust, particles, etc. in the particle pocket portion 320 may be further limited, flame propagation to other battery cells 100 may be prevented.

Referring to FIG. 7, a directional venting unit 330 may be formed in the cell cover 300 in the battery cell unit 15 according to an embodiment of the present disclosure. The directional venting unit 330 is configured to guide venting gas to be discharged in a preset direction.

When the thermal resin 400 is coupled to the cell cover 300, as shown in FIG. 6, there are a portion of the cell cover 300 to which the thermal resin 400 is coupled and a portion of the cell cover 300 to which the thermal resin 400 is not coupled.

A gas outlet 331 may be formed in the portion of the cell cover 300 to which the thermal resin 400 is not coupled. For example, the gas outlet 331 may be formed in a lower portion of the cell cover 300. Also, a movement path 332 (see FIG. 7) may be formed between the pouch-type battery cell 100 and the cell cover 300.

**In** this case, the directional venting unit 330 may include the gas outlet 331 and the movement path 332, and referring to an arrow of FIG. 7, gas generated in the pouch-type battery cell 100 may move through the movement path 332 and may be discharged to the outside through the gas outlet 331 in the lower portion of the cell cover 300.

Referring to FIG. 7, when venting gas is generated in the pouch-type battery cell 100, the venting gas may move to the front side or the rear side of the cell cover 300 along the particle pocket portion 320. **In** this case, particles or flames may not pass through the mesh member 321 provided in the particle pocket portion 320, and the venting gas may pass through the mesh member 321 and may be discharged through the directional venting unit 330 including the movement path 332 and the gas outlet 331.

As such, when the directional venting unit 330 is formed in the cell cover 300 and gas is generated in an arbitrary battery cell 100 included in the battery cell unit 15, the gas may be discharged toward a lower portion of the pack case 200 through the directional venting unit 330 without propagating to other adjacent battery cells 100.

That is, according to this embodiment of the present disclosure, because gas or flame may be guided to be discharged to the outside of the pack case 200 through the directional venting unit 330, directional venting may be easily achieved.

Accordingly, the battery cell unit 15 according to an embodiment of the present disclosure may prevent or suppress thermal runaway propagation between the pouch-type battery cells 100 during a thermal event.

FIG. 8 is a schematic exploded perspective view illustrating a battery pack, according to an embodiment of the present disclosure.

The battery pack 10 according to an embodiment of the present disclosure is provided so that the battery cell 100 is directly accommodated in the pack case 200 by removing a battery module (not shown).

Accordingly, because the battery cell 100 may be further accommodated in a space occupied by a module case of the battery module (not shown) in the battery pack 10, space efficiency may be improved and battery capacity may be improved. That is, in the present disclosure, the module case of the battery module (not shown) may not be included in a configuration.

However, an embodiment of using the module case is not excluded, and the pouch-type battery cell 100 of each embodiment of the present disclosure may be configured to be accommodated in the module case provided in the battery module (not shown) when necessary.

That is, the battery module (not shown) including the pouch-type battery cell 100 to which the cell cover 300 in each embodiment of the present disclosure is coupled also falls within the scope of the present disclosure.

Even when simply described as the battery cell 100 in the specification, the battery cell 100 refers to the pouch-type battery cell 100.

Referring to FIG. 8, the battery pack 10 according to an embodiment of the present disclosure includes the battery cell unit 15 and the pack case 200. The battery cell unit 15 has been described above, and thus, a repeated description thereof will be omitted.

The pack case 200 may have an empty inner space, and the battery cell units 15 including the pouch-type battery cell 100 and the cell cover 300 may be accommodated in the inner space. In particular, in the present disclosure, the battery cell unit 15 may be directly seated on the pack case 200.

Referring to FIG. 8, the cell cover 300 may be directly seated on an upper surface of the pack case 200. For example, a lower end of the cell cover 300 may directly contact and be seated on the upper surface of the pack case 200.

In particular, the cell cover 300 and the pouch-type battery cell 100 may be directly seated on the pack case 200 without being accommodated in a separate module case. However, as described above, an embodiment of locating the cell cover 300 and the pouch-type battery cell 100 on the module case and modularizing them is not excluded.

Accordingly, the cooling performance of the battery pack 10 may be more effectively ensured. In particular, because the pouch-type battery cell 100 may be in face-to-face contact with the pack case 200, heat emitted from each pouch-type battery cell 100 may be directly transferred to the pack case 200, thereby improving cooling performance.

The cell cover 300 may be configured so that at least one side of the surrounded pouch-type battery cell 100 is exposed toward a bottom surface of the battery pack 10.

The cell cover 300 configured to surround at least some of the plurality of pouch-type battery cells 100 may be accommodated in the inner space of the pack case 200.

Also, the battery pack 10 according to an embodiment of the present disclosure may further include a control module configured to control charging and discharging of the pouch-type battery cells 100. Referring to FIG. 8, the control module may include a battery management system (BMS) 500 and a battery blocking unit 600, and may be accommodated in the pack case 200 together with the battery cell 100 and the cell cover 300.

Also, the battery pack 10 according to an embodiment of the present disclosure may further include an end plate (not shown) coupled to an open portion of the cell cover 300. For example, front and rear sides of the cell cover 300 where the electrode leads are provided may be open. An end plate (not shown) may be coupled to the open portion of the cell cover 300. Furthermore, a hole or a cut portion for venting may be formed in the end plate (not shown).

When a plurality of battery cells 100 are accommodated in the cell cover 300, a separation structure between the battery cells 100 may be further included.

Because venting gas generated in an arbitrary battery cell unit may be discharged in a preset direction, a movement direction of venting gas during a thermal event may be predicted, and thus, the venting gas may be more safely discharged to the outside without causing thermal damage to other battery cell units.

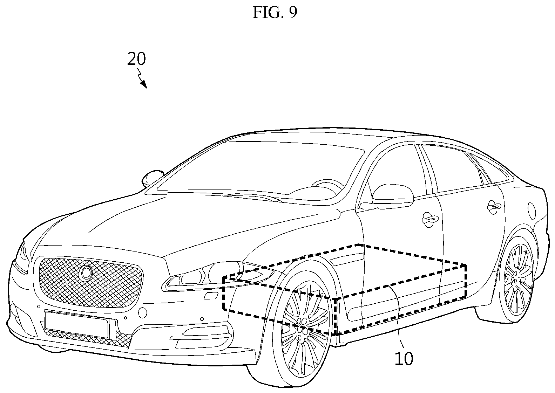

FIG. 9 is a view for describing a vehicle including a battery pack according to each embodiment of the present disclosure.

A vehicle 20 according to an embodiment of the present disclosure may include one or more battery packs 10 according to each of the above embodiments. The vehicle 20 includes any of various vehicles 20 provided to use electricity such as an electric vehicle or a hybrid vehicle.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### INDUSTRIAL APPLICABILITY

The present disclosure relates to a battery cell unit, and a battery pack and a vehicle including the same, and particularly, may be used in industries related to secondary batteries.

## Claims

1. A battery cell unit (15) comprising:
a pouch-type battery cell (100); and
a cell cover (300) provided to at least partially surround the pouch-type battery cell (100) to cover both side surfaces and an upper side of the pouch-type battery cell (100),
wherein the cell cover (300) is spaced apart from the pouch-type battery cell (100) and comprises a particle pocket portion (320) configured to collect particles ejected from the pouch-type battery cell (100) when a thermal event occurs,
**characterized in that** the particle pocket portion (320) is formed on an upper side of the cell cover (300) so that both side portions (315, 317) along a width direction of the cell cover (300) protrude more upward than a central portion (316).

2. The battery cell unit (15) according to claim 1, wherein a mesh member (321) is formed inside the particle pocket portion (320).

3. The battery cell unit (15) according to claim 2, wherein the mesh member (321) is formed by overlapping several porous metal plates.

4. The battery cell unit (15) according to claim 1, wherein a directional venting unit (330) is formed in the cell cover (300) to guide venting gas to be discharged in a preset direction.

5. The battery cell unit (15) according to claim 4, comprising a thermal resin (400) coupled to the cell cover (300),
wherein the cell cover (300) comprises a portion to which the thermal resin (400) is coupled and a portion to which the thermal resin (400) is not coupled,
wherein the directional venting unit (330) comprises:
a gas outlet (331) formed in the portion of the cell cover (300) to which the thermal resin (400) is not coupled; and
a movement path (332) formed between the pouch-type battery cell (100) and the cell cover (300).

6. The battery cell unit (15) according to claim 5, wherein the gas outlet (331) is formed in a lower portion of the cell cover (300).

7. The battery cell unit (15) according to claim 1, wherein the cell cover (300) is configured to support a state where a plurality of pouch-type battery cells (100) are stacked.

8. The battery cell unit (15) according to claim 1, wherein the cell cover (300) is formed in an 'n' shape.

9. The battery cell unit (15) according to claim 1, wherein the cell cover (300) is formed of a metal material.

10. The battery cell unit (15) according to claim 1, further comprising a bus bar (700) connecting a plurality of electrode leads.

11. The battery cell unit (15) according to claim 1, wherein the cell cover (300) is provided to partially surround the pouch-type battery cell (100) so that at least one side of the surrounded pouch-type battery cell (100) is exposed to outside.

12. A battery pack (10) comprising:
the battery cell unit (15) according to any one of claims 1 to 11; and
a pack case (200) having an inner space in which the battery cell unit (15) is accommodated.

13. The battery pack (10) according to claim 12, wherein the cell cover (300) is provided to at least partially surround the pouch-type battery cell (100) so that at least one side of the surrounded pouch-type battery cell (100) is exposed toward a bottom surface of the battery pack (10).

14. The battery pack (10) according to claim 12, wherein the cell cover (300) is directly seated on the pack case (200).

15. A vehicle (20) comprising the battery cell unit (15) according to any one of claims 1 to 11.

## Patentansprüche

1. Batteriezelleneinheit (15), umfassend:
eine Batteriezelle (100) vom Beuteltyp; und
eine Zellenabdeckung (300), welche bereitgestellt ist, um die Batteriezelle (100) vom Beuteltyp wenigstens teilweise zu umgeben, um beide Seitenflächen und eine obere Seite der Batteriezelle (100) vom Beuteltyp abzudecken,
wobei die Zellenabdeckung (300) von der Batteriezelle (100) vom Beuteltyp beabstandet ist und einen Partikel-Taschenabschnitt (320) umfasst, welcher dazu eingerichtet ist, Partikel zu sammeln, welche von der Batteriezelle (100) vom Beuteltyp ausgestoßen werden, wenn ein thermisches Ereignis auftritt,
**dadurch gekennzeichnet, dass** der Partikel-Taschenabschnitt (320) an einer oberen Seite der Zellenabdeckung (300) gebildet ist, so dass beide Seitenabschnitte (315, 317) entlang einer Breitenrichtung der Zellenabdeckung (300) weiter nach oben hervorstehen als ein zentraler Abschnitt (316).

2. Batteriezelleneinheit (15) nach Anspruch 1, wobei ein Maschenelement (321) innerhalb des Partikel-Taschenabschnitts (320) gebildet ist.

3. Batteriezelleneinheit (15) nach Anspruch 2, wobei das Maschenelement (321) durch Überlappen mehrerer poröser Metallplatten gebildet ist.

4. Batteriezelleneinheit (15) nach Anspruch 1, wobei eine direktionale Entlüftungseinheit (330) in der Zellenabdeckung (300) gebildet ist, um ein Entlüftungsgas zu führen, welches in einer vorfestgelegten Richtung abgegeben werden soll.

5. Batteriezelleneinheit (15) nach Anspruch 4, umfassend ein thermisches Harz (400), welches mit der Zellenabdeckung (300) gekoppelt ist,
wobei die Zellenabdeckung (300) einen Abschnitt, mit welchem das thermische Harz (400) gekoppelt ist, und einen Abschnitt umfasst, mit welchem das thermische Harz (400) nicht gekoppelt ist,
wobei die direktionale Entlüftungseinheit (330) umfasst:
einen Gasauslass (331), welcher in dem Abschnitt der Zellenabdeckung (300) gebildet ist, mit welchem das thermische Harz (400) nicht gekoppelt ist; und
einen Bewegungspfad (332), welcher zwischen der Batteriezelle (100) vom Beuteltyp und der Zellenabdeckung (300) gebildet ist.

6. Batteriezelleneinheit (15) nach Anspruch 5, wobei der Gasauslass (331) in einem unteren Abschnitt der Zellenabdeckung (300) gebildet ist.

7. Batteriezelleneinheit (15) nach Anspruch 1, wobei die Zellenabdeckung (300) dazu eingerichtet ist, einen Zustand zu fördern, in welchem eine Mehrzahl von Batteriezellen (100) vom Beuteltyp gestapelt sind.

8. Batteriezelleneinheit (15) nach Anspruch 1, wobei die Zellenabdeckung (300) in einer 'n'-Form gebildet ist.

9. Batteriezelleneinheit (15) nach Anspruch 1, wobei die Zellenabdeckung (300) aus einem Metallmaterial gebildet ist.

10. Batteriezelleneinheit (15) nach Anspruch 1, ferner umfassend eine Sammelschiene (700), welche eine Mehrzahl von Elektrodenleitungen verbindet.

11. Batteriezelleneinheit (15) nach Anspruch 1, wobei die Zellenabdeckung (300) bereitgestellt ist, um die Batteriezelle (100) vom Beuteltyp teilweise zu umgeben, so dass wenigstens eine Seite der umgebenen Batteriezelle (100) vom Beuteltyp zur Außenseite exponiert ist.

12. Batteriepack (10), umfassend:
die Batteriezelleneinheit (15) nach einem der Ansprüche 1 bis 11; und
ein Packgehäuse (200), welches einen inneren Raum aufweist, in welchem die Batteriezelleneinheit (15) untergebracht ist.

13. Batteriepack (10) nach Anspruch 12, wobei die Zellenabdeckung (300) bereitgestellt ist, um die Batteriezelle (100) vom Beuteltyp wenigstens teilweise zu umgeben, so dass wenigstens eine Seite der umgebenen Batteriezelle (100) vom Beuteltyp in Richtung einer Bodenfläche des Batteriepacks (10) exponiert ist.

14. Batteriepack (10) nach Anspruch 12, wobei die Zellenabdeckung (300) direkt an dem Packgehäuse (200) sitzt.

15. Fahrzeug (20), umfassend die Batteriezelleneinheit (15) nach einem der Ansprüche 1 bis 11**.**

## Revendications

1. Unité de cellule de batterie (15), comprenant :
une cellule de batterie de type poche (100) ; et
un couvercle de cellule (300) prévu pour entourer au moins partiellement la cellule de batterie de type poche (100) pour recouvrir les deux surfaces latérales et un côté supérieur de la cellule de batterie de type poche (100),
dans laquelle le couvercle de cellule (300) est espacé de la cellule de batterie de type poche (100) et comprend une portion de sachet à particules (320) configurée pour collecter des particules éjectées de la cellule de batterie de type poche (100) lorsqu'un événement thermique se produit,
**caractérisée en ce que** la portion de sachet à particules (320) est formée sur un côté supérieur du couvercle de cellule (300) de sorte que les deux portions latérales (315, 317) suivant une direction de largeur du couvercle de cellule (300) dépassent plus vers le haut qu'une portion centrale (316).

2. Unité de cellule de batterie (15) selon la revendication 1, dans laquelle un organe de maillage (321) est formé à l'intérieur de la portion de sachet à particules (320).

3. Unité de cellule de batterie (15) selon la revendication 2, dans laquelle l'organe de maillage (321) est formé par chevauchement de plusieurs plaques métalliques poreuses.

4. Unité de cellule de batterie (15) selon la revendication 1, dans laquelle une unité d'aération directionnelle (330) est formée dans le couvercle de cellule (300) pour guider un gaz d'aération à évacuer dans une direction prédéfinie.

5. Unité de cellule de batterie (15) selon la revendication 4, comprenant une résine thermique (400) couplée au couvercle de cellule (300),
dans laquelle le couvercle de cellule (300) comprend une portion à laquelle la résine thermique (400) est couplée et une portion à laquelle la résine thermique (400) n'est pas couplée,
dans laquelle l'unité d'aération directionnelle (330) comprend :
une sortie de gaz (331) formée dans la portion du couvercle de cellule (300) à laquelle la résine thermique (400) n'est pas couplée ; et
un chemin de déplacement (332) formé entre la cellule de batterie de type poche (100) et le couvercle de cellule (300).

6. Unité de cellule de batterie (15) selon la revendication 5, dans laquelle la sortie de gaz (331) est formée dans une portion inférieure du couvercle de cellule (300).

7. Unité de cellule de batterie (15) selon la revendication 1, dans laquelle le couvercle de cellule (300) est configuré pour soutenir un état dans lequel une pluralité de cellules de batterie de type poche (100) sont empilées.

8. Unité de cellule de batterie (15) selon la revendication 1, dans laquelle le couvercle de cellule (300) est réalisé en forme de « n ».

9. Unité de cellule de batterie (15) selon la revendication 1, dans laquelle le couvercle de cellule (300) est formé d'un matériau métallique.

10. Unité de cellule de batterie (15) selon la revendication 1, comprenant en outre une barre omnibus (700) reliant une pluralité de fils d'électrode.

11. Unité de cellule de batterie (15) selon la revendication 1, dans laquelle le couvercle de cellule (300) est prévu pour entourer partiellement la cellule de batterie de type poche (100) de sorte qu'au moins un côté de la cellule de batterie de type poche (100) entourée est exposé à l'extérieur.

12. Bloc-batterie (10) comprenant :
l'unité de cellule de batterie (15) selon l'une quelconque des revendications 1 à 11; et
un boîtier de bloc (200) ayant un espace interne dans lequel l'unité de cellule de batterie (15) est accueillie.

13. Bloc-batterie (10) selon la revendication 12, dans lequel le couvercle de cellule (300) est prévu pour entourer au moins partiellement la cellule de batterie de type poche (100) de sorte qu'au moins un côté de la cellule de batterie de type poche (100) entourée est exposé vers une surface basse du bloc-batterie (10).

14. Bloc-batterie (10) selon la revendication 12, dans lequel le couvercle de cellule (300) repose directement sur le boîtier de bloc (200).

15. Véhicule (20) comprenant l'unité de cellule de batterie (15) selon l'une quelconque des revendications 1 à 11**.**
